# EUROPÄISCHE PATENTANMELDUNG

(11) **EP 4 703 336 A1**
(43) Veröffentlichungstag der Anmeldung: **04.03.2026**
(21) Anmeldenummer: 24197381.7
(22) Anmeldetag: 29.08.2024
(51) Int. Cl.: C04B 35/18, C04B 35/622, C04B 35/64, C04B 35/66

(54) **RECYCLING VON FEUERFESTEN SILIKA-STEINEN UND HERSTELLUNG EINES FEUERFESTEN SILIKA-ALUMINA-STEINES**

(71) Anmelder: Refractory Intellectual Property GmbH & Co. KG, 1100 Wien (AT)
(72) Erfinder: Brunk, Fred, 45525 Hattingen (DE)
(74) Vertreter: Eibel, Anna

(57) **Zusammenfassung**

Die vorliegende Erfindung offenbart einen Versatz zur Herstellung eines feuerfesten Silika-Alumina-Steines, umfassend Körner eines Silika-Sekundärrohstoffes, wobei der Silika-Sekundärrohstoff einen Silika-Gehalt von mindestens 90 Gew.%, bevorzugt mindestens 93 Gew.%, aufweist, wobei das Silika im Silika-Sekundärrohstoff zumindest teilweise als Tridymit vorliegt, wobei der Silika-Sekundärrohstoff einen Tridymit-Gehalt von mindestens 10 Gew.% aufweist, wobei die Körner des Silika-Sekundärrohstoffes eine Korngröße von maximal 6 mm, bevorzugt maximal 3 mm aufweisen, weiters umfassend Körner eines Rohstoffes umfassend Alumina, wobei der Rohstoff umfassend Alumina einen Alumina-Gehalt von mindestens 10 Gew.% aufweist; und weiters umfassend ein Bindemittel umfassend Ton.

## Beschreibung

Die vorliegende Erfindung beschäftigt sich mit dem Recycling von feuerfesten Silika-Steinen und stellt einen Versatz und ein Verfahren zur Herstellung eines feuerfesten Silika-Alumina-Steines, sowie einen feuerfesten Silika-Alumina-Stein und eine Aluminium-Elektrolysezelle umfassend den feuerfesten Silika-Alumina-Stein bereit.

Feuerfeste Silika- und Silika-Alumina-Steine gehören zur Gruppe der nichtbasischen feuerfesten Steine.

Der Begriff "feuerfester Stein" bezeichnet ein geformtes feuerfestes Erzeugnis, das hochtemperaturbeständig ist und vorwiegend aus anorganischen Rohstoffmaterialien hergestellt wird. Das Material weist vorzugsweise einen Kegelfallpunkt größer SK 17 (= ISO 150) auf. Der Kegelfallpunkt kann nach ISO 528 und DIN EN 993-12 bestimmt werden.

Unter dem Begriff "feuerfester Stein" wird gemäß der vorliegenden Erfindung ein "dichter" feuerfesten Stein verstanden, also ein feuerfester Stein, der (im Gegensatz zu einem "Feuerleichtstein") eine Gesamtporosität von unter 45 Vol.% aufweist.

Feuerfeste Silika-Steine (hierin auch als "Silika-Steine" bezeichnet) bestehen aus mindestens 93 Gew.% Silika (Siliziumdioxid, SiO₂), wobei die primären Rohstoffe für die Steinherstellung vorwiegend aus der kristallinen SiO₂-Modifikation Quarz bestehen und kein Tridymit enthalten. Neben Silika können feuerfeste Silika-Steine beispielsweise Eisen(III)-Oxid (Fe₂O₃, bis zu 2,5 Gew.%) und Calcia (Calciumoxid, CaO, bis zu 4 Gew.%) enthalten. Bei der Herstellung werden Silika-Steine bei Temperaturen von typischerweise über 1400 °C gebrannt. Dabei kommt es zu einem Phasenübergang von Quarz zu den SiO₂-Modifikationen Tridymit und Cristobalit, wobei Tridymit ab einer Temperatur von ca. 870 °C aus Quarz gebildet wird. Die mineralogischen Hauptbestandteile von gebrannten Silika-Steinen sind somit Tridymit und Cristobalit. Der Anteil an Rest-Quarz (also Quarz, welcher keine Phasenumwandlung durchlaufen ist), liegt in der Regel bei unter 3 Gew.% (siehe dazu: G. Routschka u. H. Wuthnow, Praxishandbuch Feuerfeste Werkstoffe, Kapitel 4.1.1, ISBN 978-3-8027-3168-6). Die SiO₂-Modifikationen Tridymit und Cristobalit besitzen eine offenere Kristallstruktur als Quarz, was sich auch in den im Vergleich zu Quarz geringeren Dichten (Quarz: 2,65 g/cm³, Tridymit: 2,26 g/cm³, Cristobalit: 2,32 g/cm³) und in einer erhöhten Reaktivität, z.B. für die hydrothermale Herstellung von Natriumpolysilikaten, zeigt (siehe dazu z.B. die DE 3938730 A1).

Feuerfeste Silika-Steine werden in Hochtemperatur-Aggregaten eingesetzt, beispielsweise in der Ofenauskleidung von Koksöfen (hier besonders in der Ofensohle, Heizwand und im Bereich des oberen Regenerators) und in Glasschmelzanlagen, wie z.B. Kalknatronsilikat-Glasschmelzwannen (dort vor allem im Wannenoberbau). Weitere Einsatzgebiete sind Hochöfen und Winderhitzer (Besatzsteine, Kuppel).

Beim Herstellungsbrand von Silika-Steinen fällt typischerweise ein großer Anteil an Produktionsausschuss (auch als "Eigenbruch" bezeichnet) an, wobei dieser Produktionsausschuss größtenteils durch Deponierung entsorgt wird. Die Entsorgung auf Deponien ist auch für bereits gebrauchte Silika-Steine (also Silika-Steine nach deren Einsatz in einem Hochtemperatur-Aggregat) üblich. Diese Art der Entsorgung ist jedoch aus ökologischer und ökonomischer Sicht unerwünscht. Daher ist es erstrebenswert, sowohl den Produktionsausschuss als auch gebrauchte Silika-Steine nach deren Einsatz zu recyceln.

Der Begriff "Recycling" bezieht sich in diesem Zusammenhang auf die Gewinnung von Silika-Sekundärrohstoffen aus gebrannten feuerfesten Silika-Steinen und auf die Verwendung dieser Sekundärrohstoffe zur Herstellung neuer feuerfester Erzeugnisse.

In der Vergangenheit hat sich die Verwendung von Silika-Sekundärrohstoffen, beispielsweise zur Herstellung von neuen Silika-Steinen, als problematisch erwiesen.

So ist z.B. die Verwendung von Silika-Stein-Produktionsausschuss als Sekundärrohstoff für die Herstellung von Silika-Steinen zwar bei ausgesuchten Steinqualitäten versatzanteilig in geringen Mengen möglich, wird in der Regel aber aufgrund resultierender schlechterer Steineigenschaftswerte (wie beispielsweise einer niedrigeren Kaltdruckfestigkeit) nur begrenzt praktiziert.

Lediglich ein sehr geringer Anteil des globalen Produktionsausschusses an Silika-Steinen kann aufbereitet und als Sekundärrohstoff für keramisches Silika-Schweißpulver oder Silika-Mörtel eingesetzt werden. Anteilig wird auch Produktionsausschuss als Sekundärrohstoff für die Herstellung von Silika-Feuerleichtsteinen (> 45 % Porosität) mit hohem Raumgewicht (ca. 1,2 g/cm³) verwendet, welche allerdings aufgrund schlechter Isoliereigenschaften äußerst limitiert Verwendung im industriellen Bereich finden. Ein sehr hoher Anteil an Eigenbruch muss daher weiterhin auf Deponien entsorgt werden.

In der DE 4342934C2 wird vorgeschlagen, Feuerfestmaterial mit hohem SiO₂-Gehalt zu recyclen, wonach das Material auf eine Korngröße von 0,1 mm bis 2,0 mm zerkleinert wird und als Quarzsand-Alternativrohstoff für die Glasherstellung eingesetzt wird. Dieses Verfahren hat sich auf dem Markt jedoch nicht durchgesetzt.

Aus der DE 10124299B4 ist ein Verfahren zum Brennen von mit Füllkoksen bedeckten Kohlenstoffkörpern in einem Ringofen bekannt, wobei die Füllkokse zwecks Vermeidung einer Schlacken- oder Krustenbildung sowie einer Reduzierung von Abbrandverlusten zusätzlich mit einer Schicht aus partikelförmigem Material, welches aus 90-98,5 Gew.% SiO₂ und 1,5-10 Gew.% CaO besteht (2-35 mm Partikelgröße), abgedeckt werden. Die Partikel können dabei auch aus Silika-Sekundärrohstoff hergestellt werden. Auch dieses Verfahren hat sich auf dem Markt nicht durchgesetzt.

Die Aufgabe der vorliegenden Erfindung besteht darin, die Recyclingfähigkeit von feuerfesten Silika-Steinen zu erhöhen und eine technisch sinnvolle und wirtschaftliche Anwendung von Silika-Sekundärrohstoffen bereitzustellen.

Diese Aufgabe wird gemäß den unabhängigen Ansprüchen durch einen Versatz zur Herstellung eines feuerfesten Silika-Alumina-Steines, einen feuerfesten Silika-Alumina-Stein, sowie deren Herstellungsverfahren und Verwendung gelöst.

Der Kern der vorliegenden Erfindung besteht darin, einen Silika-Sekundärrohstoff, welcher die Silika-Modifikation Tridymit enthält, als Versatzkomponente für die Herstellung eines feuerfesten Silika-Alumina-Steines zu verwenden.

Im Rahmen der vorliegenden Erfindung werden die Begriffe "Silika-Alumina-Stein" und "Schamottestein" (auf Englisch: "Chamotte brick" bzw. "Fireclay Brick") austauschbar verwendet. Silika-Alumina-Steine bzw. Schamottesteine sind geformte und dichte (also eine Gesamtporosität von unter 45 Vol.% aufweisende) feuerfeste Erzeugnisse der Silika-Alumina-Reihe. Silika-Alumina-Steine (Schamottesteine) basieren auf den Oxiden Silika (SiO₂) und Alumina (Al₂O₃), wobei der Alumina-Gehalt zwischen 10 und 45 Gew.% liegt, und der Silika-Gehalt bis zu 85 Gew.% beträgt. Schamottesteine können außerdem geringe Mengen an Eisen(III)-Oxid (Fe₂O₃, bis zu 3 Gew.%) und Titanoxid (TiO₂, bis zu 3 Gew.%) enthalten. Weiters können Schamottesteine Calcia (Calciumoxid, CaO), Magnesia (Magnesiumoxid, MgO) sowie Natriumoxid (Na₂O) und/oder Kaliumoxid (K₂O) enthalten, wobei die Summe aus CaO und MgO typischerweise unter 1 Gew.% und die Summe aus Na₂O und K₂O typischerweise unter 3,5 Gew.% liegt.

Schamottesteine werden in Abhängigkeit ihres Alumina-Gehalts in verschiedene Kategorien eingeteilt. Steine mit einem Alumina-Gehalt von mindestens 30 Gew.% und bis zu 45 Gew.% werden als aluminareiche Schamotteerzeugnisse bezeichnet. Steine mit einem Alumina-Gehalt von mindestens 10 Gew.% und unter 30 Gew.% werden als aluminaarme Schamotteerzeugnisse bezeichnet.

Gemäß Anspruch 1 wird ein Versatz zur Herstellung eines feuerfesten Silika-Alumina-Steines (Schamottesteines) bereitgestellt, wobei der Versatz folgende Komponenten umfasst:
- Körner eines Silika-Sekundärrohstoffes,
   ∘ wobei der Silika-Sekundärrohstoff einen Silika-Gehalt von mindestens 90 Gew.%, bevorzugt mindestens 93 Gew.%, aufweist;
   ∘ wobei das Silika im Silika-Sekundärrohstoff zumindest teilweise als Tridymit vorliegt, wobei der Silika-Sekundärrohstoff einen Tridymit-Gehalt von mindestens 10 Gew.% aufweist;
   ∘ wobei die Körner des Silika-Sekundärrohstoffes eine Korngröße von maximal 6 mm, bevorzugt maximal 3 mm, aufweisen;
- Körner eines Rohstoffes umfassend Alumina,
   o wobei der Rohstoff umfassend Alumina einen Alumina-Gehalt von mindestens 10 Gew.% aufweist; und
- ein Bindemittel umfassend Ton.

Der Begriff "Versatz" bezeichnet im Rahmen der vorliegenden Erfindung eine Zusammensetzung aus Rohstoff- und Bindemittel-Komponenten, aus welcher ein feuerfester Stein herstellbar ist.

Der erfindungsgemäße Versatz umfasst Körner eines Silika-Sekundärrohstoffes, in welchem das Silika zumindest teilweise als Tridymit vorliegt. Der Begriff "Silika-Sekundärrohstoff" bezeichnet im Rahmen der vorliegenden Erfindung einen Rohstoff, welcher aus einem gebrannten feuerfesten Silika-Stein erhalten wird. Bei dem gebrannten feuerfesten Silika-Stein kann es sich beispielsweise um bei der Herstellung von Silika-Steinen anfallenden Produktionsausschuss oder um gebrauchte Silika-Steine nach deren Einsatz in einem Hochtemperatur-Aggregat handeln.

Es wurde überraschenderweise gefunden, dass ein aus dem erfindungsgemäßen Versatz hergestellter Silika-Alumina-Stein ausgezeichnete Materialeigenschaften aufweist. Insbesondere wurde gefunden, dass ein Silika-Alumina-Stein, bei dessen Herstellung ein primärer Silika-Rohstoff wie Quarzit oder Quarzsand durch den hierin beschriebenen Tridymit-haltigen Silika-Sekundärrohstoff ersetzt wurde, eine verbesserte Kryolith-Beständigkeit und eine niedrigere Rohdichte aufweist. Unter dem Begriff "Kryolith-Beständigkeit" wird hierin die Beständigkeit gegenüber einer Kryolithschmelze verstanden. Die Kryolith-Beständigkeit kann beispielsweise gemäß BS ISO 20292:2009 bestimmt werden. Eine verbesserte Kryolith-Beständigkeit ist zum Beispiel bei einer Anwendung des Silika-Alumina-Steines in der Bodenauskleidung von Aluminium-Elektrolysezellen von Vorteil. Eine verringerte Rohdichte erlaubt zudem eine Reduktion der Herstellungskosten des feuerfesten Silika-Alumina-Steines.

Die vorliegende Erfindung ermöglicht es somit, Silika-Steine (insbesondere Produktionsausschuss von Silika-Steinen oder gebrauchte Silika-Steine) zu recyclen, und damit deren wirtschaftlich und ökologisch unerwünschte Deponieentsorgung zu reduzieren. Gleichzeitig überwindet die vorliegende Erfindung das technische Vorurteil, dass der Einsatz von Sekundärrohstoffen grundsätzlich zu einer Verschlechterung der Eigenschaften von daraus hergestellten feuerfesten Steinen führt.

Im erfindungsgemäßen Versatz weist der Silika-Sekundärrohstoff einen Silika-Gehalt von mindestens 90 Gew.% auf. Somit liegt das Silika im Silika-Sekundärrohstoff in hoher Reinheit vor. Als weitere Bestandteile kann der Silika-Sekundärrohstoff beispielsweise Eisen(III)-Oxid (Fe₂O₃, bis zu 2,5 Gew.%), Calcia (Calciumoxid, CaO, bis zu 4 Gew.%) oder Natriumoxid (Na₂O, bis 6 Gew.%) enthalten. Natriumoxid kann im Silika-Sekundärrohstoff insbesondere dann enthalten sein, wenn es sich bei dem Silika-Sekundärrohstoff um einen gebrauchten Silika-Stein nach dessen Einsatz in einer Glasschmelzanlage handelt. Bevorzugt weist der Silika-Sekundärrohstoff einen Silika-Gehalt von mindestens 93 Gew.%, besonders bevorzugt von mindestens 95 Gew.%, auf. Der Gehalt an Silika im Silika-Sekundärrohstoff kann gemäß DIN EN ISO 12677:2013-02 bestimmt werden.

Im Rahmen der vorliegenden Erfindung wurde gefunden, dass der im Silika-Sekundärrohstoff vorhandene Tridymit bei der Herstellung eines Silika-Alumina-Steines aus dem erfindungsgemäßen Versatz stabil bleibt und auch nach dem Brand des Silika-Alumina-Steines weiterhin als Tridymit vorliegt. Im Gegensatz dazu beinhalten konventionell hergestellte Silika-Alumina-Steine (d.h. Silika-Alumina-Steine, welche aus einem Versatz ohne Silika-Sekundärrohstoff hergestellt werden) kein Tridymit und bestehen mineralogisch nach dem Brand hauptsächlich aus Mullit, Cristobalit, amorpher Glasphase und Quarz, wobei Quarz dann vorliegt, wenn im Versatz Silika-Primärrohstoffe wie Quarzit oder Quarzsand eingesetzt wurden.

Somit erlaubt der erfindungsgemäße Versatz die Herstellung eines Tridymit-haltigen Silika-Alumina-Steines. Erfindungsgemäß weist der Silika-Sekundärrohstoff einen Tridymit-Gehalt von mindestens 10 Gew.% auf, d.h. der Gehalt an Tridymit im Silika-Sekundärrohstoff beträgt mindestens 10 Gew.%, bezogen auf die Gesamtmasse des Silika-Sekundärrohstoffes. Somit besteht der Silika-Sekundärrohstoff zu mindestens 10 Gew.% aus Tridymit.

Gemäß der vorliegenden Erfindung wird der Gehalt an Tridymit mittels Pulver-Röntgendiffraktometrie bestimmt. Bevorzugt wird dafür das zu bestimmende Probenmaterial bis zur Gewichtskonstanz bei ca. 110 °C getrocknet und in einer Wolframcarbid-Scheibenschwingmühle auf eine Korngröße von < 0,063 mm gemahlen (mittlere Korngröße < 0,030 mm). Für die Probenpräparation werden bevorzugt beidseitig offene Probenhalter verwendet, wobei die Probenpräparation bevorzugt mit geringem Anpressdruck (< 0,05 MPa) durchgeführt wird, um Textureffekte in der Probe zu verhindern. Die Tridymit-Bestimmung erfolgt bevorzugt mittels externer Standard-Methode, wobei als externer Standard (Referenzmaterial) ein gebrauchter Silika-Stein mit 98 Gew.% Tridymit verwendet wird. Die Messung kann mit einem Diffraktometer der Firma Philips (X'Pert PRO MPD) erfolgen, welches mit Ni-gefilterter Cu-Kα-Strahlung (1,5405 Å Wellenlänge), 40 kV Betriebsspannung, 40 mA Betriebsstrom und 1°/min 2Θ-Abtastgeschwindigkeit betrieben wird, und mit welchem für die Tridymit-Bestimmung über einen 2Θ-Bereich von 22,6° bis 23,7° gemessen wird. Es werden bevorzugt jeweils mindestens drei Proben des externen Standards und mindestens zwei Proben des zu bestimmenden Materials vorbereitet und gemessen. Der Tridymit-Gehalt des zu bestimmenden Materials ergibt sich aus dem Mittelwert der Messungen der mindestens zwei Proben.

Als weitere Silika-Modifikationen kann der Silika-Sekundärrohstoff Cristobalit enthalten, wobei der Gehalt an Cristobalit im Silika-Sekundärrohstoff bevorzugt im Bereich von mindestens 10 Gew.% liegen kann. Als weitere Silika-Modifikation kann der Silika-Sekundärrohstoff auch Quarz enthalten, wobei der Gehalt an Quarz im Silika-Sekundärrohstoff bevorzugt maximal 6 Gew.%, weiter bevorzugt maximal 3 Gew.%, beträgt. Der Silika-Sekundärrohstoff kann in einigen Ausführungsformen amorphe Glasphase und/oder Kalziumsilikat enthalten.

Der Gehalt an Cristobalit und Quarz wird im Rahmen der vorliegenden Erfindung ebenfalls mittels Pulver-Röntgendiffraktometrie bestimmt. Die Bestimmung von Cristobalit und Quarz kann analog zur oben beschriebenen Tridymit-Bestimmung erfolgen, wobei bevorzugt folgende externe Standards verwendet werden: für Quarz ein gebrauchter Silika-Stein ohne Restquarz, dem 10 Gew.% Quarz zugemischt wurden, und für Cristobalit thermisch behandeltes hochreines amorphes SiO₂, welches nach der thermischen Behandlung 100 Gew.% Cristobalit enthält. Die Messungen können über folgende 2Θ-Bereiche durchgeführt werden: Quarz 26,1 ° bis 27,0° und Cristobalit 21,0° bis 22,5°.

Der Tridymit-Gehalt im Silika-Sekundärrohstoff von mindestens 10 Gew.% erlaubt es, einen Tridymit-haltigen Silika-Alumina-Stein mit vorteilhaften Steineigenschaften, insbesondere in Bezug auf die Kryolith-Beständigkeit zu erhalten, wie hierin beschrieben. Es wird vermutet, dass diese vorteilhaften Steineigenschaften auf die Anwesenheit von Tridymit, und insbesondere auf eine erhöhte Reaktivität von Tridymit im Vergleich zu Quarz, zurückzuführen sind.

Bevorzugt weist der Silika-Sekundärrohstoff einen Tridymit-Gehalt im Bereich von 10 Gew.% bis 90 Gew.% auf. Weiter bevorzugt weist der Silika-Sekundärrohstoff einen Tridymit-Gehalt von über 10 Gew.%, noch weiter bevorzugt von über 20 Gew.%, auf. Gemäß bestimmten Ausführungsformen weist der Silika-Sekundärrohstoff einen Tridymit-Gehalt im Bereich von 20 Gew.% bis 80 Gew.%, bevorzugt 25 Gew.% bis 80 Gew.%, noch weiter bevorzugt 30 Gew.% bis 70 Gew.%, und besonders bevorzugt 40 Gew.% bis 60 Gew.%, auf. Diese Tridymit-Gehalte führen einerseits zu vorteilhaften Steineigenschaften in Silika-Alumina-Steinen, und lassen sich andererseits durch Verwendung von herkömmlichen gebrannten Silika-Steinen erreichen, sodass herkömmliche gebrannte Silika-Steine recycelt werden können, indem sie als Sekundärrohstoff im erfindungsgemäßen Versatz eingesetzt werden.

Im erfindungsgemäßen Versatz liegt der Silika-Sekundärrohstoff in Form von Körnern mit einer Korngröße von maximal 6 mm, bevorzugt von maximal 3 mm vor. Dieser Korngrößenbereich ist vorteilhaft für die Verarbeitbarkeit und Homogenität des erfindungsgemäßen Versatzes. Dies ist besonders vorteilhaft für die Verarbeitbarkeit und Homogenität des erfindungsgemäßen Versatzes. In der vorliegenden Erfindung wird die Korngröße gemäß DIN EN ISO 1927-3 (2013) bestimmt.

Im erfindungsgemäßen Versatz können die Körner des Silika-Sekundärrohstoffes bevorzugt in einem Anteil von 5 Gew.% bis 50 Gew.%, bezogen auf die Gesamtmasse des Versatzes, eingesetzt werden. Bevorzugt umfasst der Versatz die Körner des Silika-Sekundärrohstoffes in einem Anteil von 10 Gew.% bis 50 Gew.%, bevorzugt 20 Gew.% bis 50 Gew.%, weiter bevorzugt 25 Gew.% bis 45 Gew.%, noch weiter bevorzugt 30 Gew.% bis 45 Gew.%, bezogen auf die Gesamtmasse des Versatzes. Diese Anteile an Silika-Sekundärrohstoff im Versatz erlauben es, gebrannte feuerfeste Silika-Steine in großer Menge zu recyceln. Zudem erlauben diese Anteile an Silika-Sekundärrohstoff die Herstellung eines Silika-Alumina-Steines, welcher beispielsweise bei einem Einsatz in einer Aluminium-Elektrolysezelle vorteilhafte Eigenschaften, insbesondere in Bezug auf die Kryolith-Beständigkeit, zeigt.

Bevorzugt liegt der Silika-Sekundärrohstoff im erfindungsgemäßen Versatz in Form von Silika-Stein-Produktionsausschuss und/oder in Form von gebrauchten Silika-Steinen vor.

Unter "Silika-Stein-Produktionsausschuss" ist gemäß der vorliegenden Erfindung Ausschussmaterial zu verstehen, das beim Brand von feuerfesten Silika-Steinen anfällt. Dabei kann es sich z.B. um zerbrochene gebrannte Silika-Steine handeln, welche nicht für ihren vorgesehenen Einsatz in einem Hochtemperatur-Aggregat geeignet sind. An der Verwendung von Silika-Stein-Produktionsausschuss als Silika-Sekundärrohstoff ist vorteilhaft, dass das Material noch nicht in einem Hochtemperatur-Aggregat zur Anwendung kam, und daher keine anwendungsbedingten Verunreinigungen im Stein vorhanden sind.

Alternativ oder ergänzend dazu kann der Silika-Sekundärrohstoff in Form von gebrauchten Silika-Steinen vorliegen. Unter dem Begriff "gebrauchter Silika-Stein" wird gemäß der vorliegenden Erfindung ein gebrannter feuerfester Silika-Stein nach dessen Einsatz in einem Hochtemperatur-Aggregat verstanden.

Falls gebrauchte Silika-Steine als Silika-Sekundärrohstoff eingesetzt werden, handelt es sich dabei bevorzugt um Ofenausbruchsmaterial aus einem Koksofen oder aus einer Glasschmelzanlage. Vorteilhafterweise sind gebrauchte Silika-Steine aus Koksöfen auch nach einer langen Einsatzdauer von beispielsweise über 30 Jahren vernachlässigbar verunreinigt und weisen außerdem einsatzbedingt einen höheren Gehalt an Tridymit auf als direkt nach dem Herstellungsbrand. Dies wirkt sich vorteilhaft auf die Eigenschaften des aus dem erfindungsgemäßen Versatz hergestellten Silika-Alumina-Steines, insbesondere auf dessen Kryolith-Beständigkeit, aus.

Falls gebrauchte Silika-Steine als Silika-Sekundärrohstoff eingesetzt werden, können diese auch aus einer Glasschmelzanlage, in welcher z.B. Kalk-Natron-Gläser erzeugt werden, stammen. In diesem Fall weisen die gebrauchten Silika-Steine typischerweise eine einsatzbedingte Anreicherung von Natriumoxid (Na₂O) im Gefüge auf. Im Rahmen der vorliegenden Erfindung wurde jedoch gefunden, dass eine Na₂O-Verunreinigung keinen negativen Einfluss auf die Eigenschaften des aus dem erfindungsgemäßen Versatz hergestellten Silika-Alumina-Steines, insbesondere dessen Kryolith-Beständigkeit, hat. Vermutlich liegt dies an einem bereits vorliegenden sehr hohen Natriumgehalt von kryolithhaltigen Schmelzen.

Der erfindungsgemäße Versatz umfasst weiters Körner eines Rohstoffes umfassend Alumina (Al₂O₃), sodass aus dem Versatz ein Silika-Alumina-Stein hergestellt werden kann. Der Rohstoff umfassend Alumina weist einen Alumina-Gehalt von mindestens 10 Gew.% auf, d.h. der Gehalt an Alumina im Rohstoff umfassend Alumina beträgt mindestens 10 Gew.%, bezogen auf die Gesamtmasse des Rohstoffes umfassend Alumina. Somit besteht der Rohstoff umfassend Alumina chemisch zu mindestens 10 Gew.% aus Alumina. Bevorzugt weist der Rohstoff umfassend Alumina einen Alumina-Gehalt von mindestens 20 Gew.% auf. Der Rohstoff umfassend Alumina kann in bestimmten Ausführungsformen einen Alumina-Gehalt von mindestens 30 Gew.% aufweisen. Der Rohstoff umfassend Alumina weist bevorzugt einen Alumina-Gehalt von maximal 50 Gew.% auf. Der Gehalt an Alumina im Rohstoff umfassend Alumina kann gemäß DIN EN ISO 12677:2013-02 bestimmt werden.

Bevorzugt umfasst der Rohstoff umfassend Alumina auch Silika. Besonders bevorzugt liegt das Alumina im Rohstoff umfassend Alumina zumindest teilweise in Form eines Alumosilikats vor. Der Begriff "Alumosilikat" bezieht sich hierin auf verschiedene Silikate auf Basis der Grundoxide Al₂O₃ und SiO₂. Besonders bevorzugt umfasst der Rohstoff umfassend Alumina das Alumosilikat Mullit. Mullit ist ein Inselsilikat, welches eine Summenformel von 3Al₂O₃·2SiO₂ bzw. 2Al₂O₃·SiO₂ aufweist. Rohstoffe umfassend Alumosilikate, insbesondere umfassend Mullit, werden üblicherweise für die Herstellung von Silika-Alumina-Steinen eingesetzt.

Bevorzugt umfasst der Rohstoff umfassend Alumina Schamotte, Klinker und/oder Porzellan. Besonders bevorzugt umfasst der Rohstoff umfassend Alumina Schamotte. Schamotte kann bekanntermaßen durch den Brand von Ton erhalten werden. Der Begriff "Ton" bezeichnet hierin ein Material, welches hauptsächlich aus Tonmineralen besteht. Unter dem Begriff "Tonminerale" werden hierin Sedimentgesteine aus feinkörnigen (Korngröße < 2µm), kristallinen, wasserhaltigen Alumosilikaten mit plättchenförmiger Schichtstruktur verstanden. Hauptvertreter dieser Tonminerale ist die Kaolingruppe, welche ein Kristallgitter aus zwei Schichten aufweist und die Mineralien Kaolinit und Fireclay (Al₂O₃ · 2 SiO₂ · 2 H₂O), sowie Halloysit (Al₂O₃ · 2 SiO₂ · 4 H₂O) umfasst. Zu den Tonmineralen zählen auch die Montmorillonit- und Illitgruppe (beide mit der Grundformel Al₂O₃ · 4 SiO₂ · 4 H₂O, jedoch mit unterschiedlicher Kristallstruktur), welche ein Kristallgitter aus drei Schichten zeigen. In Ton können auch weitere Minerale wie Pyrit, Calcit, Siderit, Quarz, Bauxit, sowie weitere Alumina-haltige Minerale in geringen Mengen vorliegen.

Beim Brand von Tonen wird das Kristallwasser der Tonminerale abgegeben und die Kristallgitter zerfallen. Ab einer Temperatur von 950 °C setzt die Reaktion von Al₂O₃ und SiO₂ zu Mullit ein. Über 1100 °C liegen Mullit, Cristobalit und Schmelzphase vor. Die gebrannten Tone weisen üblicherweise einen Alumina-Gehalt zwischen 10 Gew.% und 50 Gew.%, bevorzugt zwischen 10 Gew.% und 45 Gew.%, und einen Silika-Gehalt von bis zu 85 Gew.% auf. Gebrannte Tone werden hierin als "Schamotterohstoff" bzw. "Schamotte" oder "Schamotten" bezeichnet. Die Herstellung von Schamotten kann in Schachtöfen, Ringöfen, Tunnelöfen und Drehrohröfen bei ca. 1200 °C bis 1500 °C erfolgen. Die so hergestellten Schamotten können auf eine passende Korngröße zerkleinert werden und als Rohstoff umfassend Alumina im erfindungsgemäßen Versatz eingesetzt werden.

Gemäß einer bevorzugten Ausführungsform umfasst der Rohstoff umfassend Alumina Schamotte in einem Anteil von mindestens 50 Gew.%, bevorzugt mindestens 75 Gew.%, bezogen auf die Gesamtmasse des Rohstoffes umfassend Alumina. Gemäß einer besonderen Ausführungsform besteht der Rohstoff umfassend Alumina aus Schamotte. Die Verwendung von Schamotte als Rohstoff für die Herstellung von Silika-Alumina-Steinen ist vorteilhaft, da dieser Rohstoff bereits gebrannt wurde und somit während des Brandes des Silika-Alumina-Steines keinem bzw. nur einem vernachlässigbaren Volumenschwund unterliegt, wodurch die Herstellung eines volumenstabilen Silika-Alumina-Steines ermöglicht wird.

Wenn der Rohstoff umfassend Alumina Schamotte umfasst, kann die Schamotte in Form eines Schamotte-Sekundärrohstoffes bereitgestellt werden. Unter einem "Schamotte-Sekundärrohstoff" werden hierin Schamotte-Produktionsausschuss sowie gebrauchte Schamotteprodukte nach deren industriellen Einsatz verstanden. Dies erlaubt ein Recycling von Schamotteprodukten.

Als Rohstoff umfassend Alumina können auch Klinker oder Porzellan eingesetzt werden. Unter dem Begriff "Klinker" werden hierin Alumosilikat-haltige Ziegelsteine verstanden. Der Begriff "Porzellan" bezeichnet ein feinkeramisches Mullit-haltiges Erzeugnis, das durch den Brand eines Gemisches aus Kaolin, Feldspat und Quarz erhalten wird. Klinker oder Porzellan können im erfindungsgemäßen Versatz ergänzend zu oder anstelle von Schamotte als Rohstoff umfassend Alumina eingesetzt werden. Klinker oder Porzellan können wie Schamotte als Sekundärrohstoff bereitgestellt werden, beispielsweise als Klinkerbruch oder Porzellanbruch. Unter "Klinkerbruch" bzw. "Porzellanbruch" wird zerbrochenes Ausschussmaterial aus der Klinker- bzw. Porzellanherstellung verstanden.

Gemäß weiteren Ausführungsformen umfasst der Rohstoff umfassend Alumina kalzinierten Bauxit, Andalusit, kalzinierte Tonerde und/oder Korund. Bei Bauxit handelt es sich um ein Aluminiumerz, das insbesondere verschiedene Aluminiumminerale (insbesondere Gibbsit (γ-Al(OH)₃), Böhmit (γ-AlO(OH)), Diaspor (α-AlOP(OPH)), Eisenverbindungen (Hämatit (Fe₂O₃) und Goethit (FeO(OH)), sowie Kaolinit und Titanoxid (Anatas (TiO₂)) umfasst. Bei Andalusit handelt es sich um ein Alumosilikat der Summenformel Al₂O₃ · SiO₂. Kalzinierte Tonerde und Korund bestehen aus Al₂O₃.

Gemäß einer besonderen Ausführungsform umfasst der Rohstoff umfassend Alumina Schamotte und eine oder mehrere Komponenten aus der Gruppe bestehend aus Klinker, Porzellan, kalziniertem Bauxit, Andalusit, kalzinierter Tonerde und Korund. In diesem Fall kann Schamotte in einem Anteil von mindestens 50 Gew.%, bevorzugt mindestens 75 Gew.%, bezogen auf die Gesamtmasse des Rohstoffes umfassend Alumina, im Rohstoff umfassend Alumina enthalten sein.

Die Korngröße des Rohstoffes umfassend Alumina beträgt bevorzugt maximal 6 mm. Bevorzugt liegt die Korngröße des Rohstoffes umfassend Alumina im Bereich bis 6 mm. Der Rohstoff umfassend Alumina kann beispielsweise in Form von zwei Kornfraktionen bereitgestellt werden. Dementsprechend kann eine erste Fraktion mit einer Korngröße kleiner 3 mm und eine zweite Fraktion mit einer Korngröße von 3 mm bis 6 mm bereitgestellt werden.

Bevorzugt weist der Versatz die Körner des Rohstoffes umfassend Alumina in einem Anteil von 10 Gew.% bis 85 Gew.%, bezogen auf die Gesamtmasse des Versatzes, auf. Bevorzugt weist der Versatz die Körner des Rohstoffes umfassend Alumina in einem Anteil von 15 Gew.% bis 80 Gew.%, bevorzugt 15 Gew.% bis 75 Gew.%, weiter bevorzugt 15 Gew.% bis 70 Gew.%, weiter bevorzugt 20 Gew.% bis 60 Gew.%, bezogen auf die Gesamtmasse des Versatzes, auf. Diese Gewichtsanteile sind für die Herstellung eines Silika-Alumina-Steines vorteilhaft.

Der erfindungsgemäße Versatz weist weiters ein Bindemittel umfassend Ton auf. Bevorzugt besteht das Bindemittel aus Ton. Ton stellt für den erfindungsgemäßen Versatz ein vorteilhaftes Bindemittel dar, da die Anwesenheit von Ton bewirkt, dass der Versatz plastisch und verformbar ist und nach der Formgebung eine ausreichende Grünfestigkeit aufweist. Eine hohe Plastizität kann insbesondere dann erreicht werden, wenn der Versatz vor der Formgebung mit Wasser versetzt wird, beispielsweise mit Wasser in einer Menge von 3 Gew.% bis 16 Gew.%, bezogen auf die Gesamtmasse des (trockenen) Versatzes.

Bevorzugt liegt der Ton im Versatz in einem Anteil von 5 Gew.% bis 50 Gew.%, bevorzugt 5 Gew.% bis 40 Gew.%, weiter bevorzugt 10 Gew.% bis 40 Gew.%, bezogen auf die Gesamtmasse des Versatzes, vor. Besonders bevorzugt liegt der Ton im Versatz in einem Anteil von 20 Gew.% bis 35 Gew.%, bezogen auf die Gesamtmasse des Versatzes, vor. Gemäß der vorliegenden Erfindung enthält der Versatz Ton in einem Anteil von bevorzugt maximal 50 Gew.%, weiter bevorzugt maximal 40 Gew.%, da ein höherer Anteil an Ton zu einem nachteiligen Volumenschwund während des Brandes des Silika-Alumina-Steines führen kann. Dies liegt daran, dass Ton während des Brandes Kristallwasser abgibt und Phasenumwandlungen (wie oben beschrieben) durchläuft.

In bestimmten Ausführungsformen kann das Bindemittel zusätzlich zu Ton auch ein organisches Bindemittel wie z.B. Ligninsulfonat (auch als "Sulfitablauge" bezeichnet) oder Stärke umfassen. Ein solches organisches Bindemittel wird bevorzugt dann verwendet, wenn der Tonanteil gering ist. Das organische Bindemittel dient in diesem Fall als Presshilfs- bzw. Klebemittel, um eine ausreichende Grünfestigkeit eines frisch geformten Steines zu gewährleisten. Bevorzugt wird das organische Bindemittel in einem Anteil von 0 Gew.% bis 3 Gew.%, bezogen auf die Gesamtmasse des Versatzes, eingesetzt.

In einer bevorzugten Ausführungsform weist der erfindungsgemäße Versatz die Körner des Silika-Sekundärrohstoffes in einem Anteil von 5 Gew.% bis 50 Gew.%, bevorzugt 10 Gew.% bis 50 Gew.%, sowie die Körner des Rohstoffes umfassend Alumina in einem Anteil von 10 Gew.% bis 85 Gew.%, und Ton in einem Anteil von 5 Gew.% bis 50 Gew.%, bevorzugt 5 Gew.% bis 40 Gew.%, jeweils bezogen auf die Gesamtmasse des Versatzes, auf. In einer weiteren bevorzugten Ausführungsform weist der erfindungsgemäße Versatz die Körner des Silika-Sekundärrohstoffes in einem Anteil von 20 Gew.% bis 50 Gew.%, sowie die Körner des Rohstoffes umfassend Alumina in einem Anteil von 15 Gew.% bis 75 Gew.%, und Ton in einem Anteil von 5 Gew.% bis 50 Gew.%, bevorzugt 5 Gew.% bis 40 Gew.%, jeweils bezogen auf die Gesamtmasse des Versatzes, auf. In einer weiteren bevorzugten Ausführungsform weist der erfindungsgemäße Versatz die Körner des Silika-Sekundärrohstoffes in einem Anteil von 25 Gew.% bis 45 Gew.%, sowie die Körner des Rohstoffes umfassend Alumina in einem Anteil von 15 Gew.% bis 70 Gew.%, und Ton in einem Anteil von 5 Gew.% bis 50 Gew.%, bevorzugt 5 Gew.% bis 40 Gew.%, jeweils bezogen auf die Gesamtmasse des Versatzes, auf. In einer weiteren bevorzugten Ausführungsform weist der erfindungsgemäße Versatz die Körner des Silika-Sekundärrohstoffes in einem Anteil von 25 Gew.% bis 45 Gew.%, bevorzugt 30 Gew.% bis 45 Gew.%, sowie die Körner des Rohstoffes umfassend Alumina in einem Anteil von 20 Gew.% bis 60 Gew.%, und Ton in einem Anteil von 5 Gew.% bis 50 Gew.%, bevorzugt 5 Gew.% bis 40 Gew.%, jeweils bezogen auf die Gesamtmasse des Versatzes, auf.

Die vorliegende Erfindung stellt weiters ein Herstellungsverfahren für den erfindungsgemäßen Versatz bereit, wobei das Verfahren folgende Schritte umfasst:
- Bereitstellen eines Silika-Sekundärrohstoffes mit einem Silika-Gehalt von mindestens 90 Gew.%, bevorzugt mindestens 93 Gew.%, wobei das Silika im Silika-Sekundärrohstoff zumindest teilweise als Tridymit vorliegt, wobei der Silika-Sekundärrohstoff einen Tridymit-Gehalt von mindestens 10 Gew.% aufweist;
- Zerkleinern des Silika-Sekundärrohstoffes, um Körner mit einer Korngröße von maximal 6 mm, bevorzugt maximal 3 mm, zu erhalten;
- Mischen der Körner des Silika-Sekundärrohstoffes mit:
   ∘ Körnern eines Rohstoffes umfassend Alumina, wobei der Rohstoff umfassend Alumina einen Alumina-Gehalt von mindestens 10 Gew.% aufweist, und
   ∘ einem Bindemittel umfassend Ton, um einen Versatz zur Herstellung eines feuerfesten Silika-Alumina-Steines zu erhalten.

Wie hierin beschrieben kann der Silika-Sekundärrohstoff bevorzugt in Form von Silika-Stein-Produktionsausschuss und/oder in Form von gebrauchten Silika-Steinen bereitgestellt werden, wobei die gebrauchten Silika-Steine bevorzugt aus einem Koksofen oder einer Glasschmelzanlage gewonnen werden.

Die Zerkleinerung des Silika-Sekundärrohstoffes kann mit konventionellen Zerkleinerungsmethoden erfolgen, beispielsweise unter Zuhilfenahme eines Backenbrechers oder eines Kegelbrechers. Durch Siebung mit einem Sieb mit entsprechender Maschenweite kann sichergestellt werden, dass die Körner des Silika-Sekundärrohstoffes eine Korngröße von maximal 6 mm aufweisen.

Optional können ein oder mehrere weitere Siebschritte durchgeführt werden, um die Körner des Silika-Sekundärrohstoffes nach ihren Korngrößen in zwei oder mehr Kontraktionen aufzuteilen, beispielsweise in eine Fraktion mit einer Korngröße von unter 3 mm und in eine Fraktion mit einer Korngröße von 3 mm bis 6 mm. Die Korngröße wird, wie hierin beschrieben, gemäß DIN EN ISO 1927-3 (2013) bestimmt.

Zur Herstellung des Versatzes werden die Körner des Silika-Sekundärrohstoffes mit Körnern eines Rohstoffes umfassend Alumina und einem Bindemittel umfassend Ton vermischt. Das Mischen kann mittels eines konventionellen Mixers erfolgen. Bevorzugt wird eine homogene Mischung erzeugt.

Die vorliegende Erfindung stellt weiters ein Verfahren zur Herstellung eines feuerfesten Silika-Alumina-Steines bereit, wobei das Verfahren folgende Schritte umfasst:
- Bereitstellen eines erfindungsgemäßen Versatzes wie hierin beschrieben;
- Mischen des Versatzes mit Wasser, um eine formbare Masse zu erhalten, wobei das Wasser bevorzugt in einer Menge von 3 Gew.% bis 16 Gew.%, besonders bevorzugt 4 Gew.% bis 8 Gew.%, bezogen auf die Masse des Versatzes, zugegeben wird;
- Formgebung, bevorzugt Pressen, der formbaren Masse, um einen Grünkörper zu erhalten;
- Trocknen des Grünkörpers;
- Brennen des getrockneten Grünkörpers bei einer Temperatur zwischen 1200 °C und 1500 °C, um einen gebrannten feuerfesten Silika-Alumina-Stein zu erhalten.

Gemäß dem erfindungsgemäßen Verfahren wird der Versatz mit Wasser vermischt, um eine für die Formgebung vorteilhafte hohe Plastizität der Masse zu erreichen. Die Wassermenge beträgt bevorzugt 3 Gew.% bis 16 Gew.%, besonders bevorzugt 4 Gew.% bis 8 Gew.%, bezogen auf die Masse des Versatzes.

Falls der Versatz ein organisches Bindemittel wie z.B. Ligninsulfonat, enthält, kann dieses vor dem Mischen des Versatzes mit Wasser oder gemeinsam mit dem Wasser zugegeben werden.

Die Formgebung des mit Wasser versetzten Versatzes erfolgt bevorzugt durch Pressen zu einem Grünkörper. Das Pressen kann nach verschiedenen Verfahren erfolgen, z.B. durch plastisches, halbtrockenes oder trockenes Pressen.

Nach dem Pressen wird der Grünkörper getrocknet. Die Trocknung erfolgt bevorzugt bei einer Temperatur von 20 °C bis 130 °C bis zur Gewichtskonstanz.

Danach erfolgt ein Brand des getrockneten Grünkörpers bei einer Temperatur zwischen 1200 °C bis 1500 °C, um einen feuerfesten Silika-Alumina-Stein zu erhalten. Bevorzugt erfolgt der Brand in einem Tunnelofen. Der Brand erfolgt unter einer oxidierenden oder reduzierenden, bevorzugt oxidierenden, Atmosphäre.

Die vorliegende Erfindung stellt weiters einen feuerfesten Silika-Alumina-Stein bereit, aufweisend:
- einen Alumina-Gehalt von 10 Gew.% bis 45 Gew.%; und
- einen Silika-Gehalt von 50 Gew.% bis 85 Gew.%;
- wobei das Silika zumindest teilweise als Tridymit vorliegt, wobei der Silika-Alumina-Stein einen Tridymit-Gehalt im Bereich von 2,5 Gew.% bis 50 Gew.% aufweist.

Der Gehalt an Alumina und Silika im erfindungsgemäßen Silika-Alumina-Stein kann mittels DIN EN ISO 12677:2013 ermittelt werden.

Der erfindungsgemäße Silika-Alumina-Stein weist vorteilhafte Steineigenschaften, insbesondere in Bezug auf die Kryolith-Beständigkeit auf, was vermutlich auf die Anwesenheit von Tridymit, und insbesondere auf eine erhöhte Reaktivität von Tridymit im Vergleich zu Quarz, zurückzuführen ist.

Der erfindungsgemäße Silika-Alumina-Stein weist einen Alumina-Gehalt von 10 Gew.% bis 45 Gew.% auf, d.h. der Gehalt an Alumina im erfindungsgemäßen Silika-Alumina-Stein beträgt 10 Gew.% bis 45 Gew.%, bezogen auf die Gesamtmasse des Silika-Alumina-Steines. Bevorzugt weist der erfindungsgemäße Silika-Alumina-Stein einen Alumina-Gehalt von 15 Gew.% bis 40 Gew.%, noch mehr bevorzugt von 15 Gew.% bis 35 Gew.%, auf.

Der erfindungsgemäße Silika-Alumina-Stein weist einen Silika-Gehalt von 50 Gew.% bis 85 Gew.% auf, d.h. der Gehalt an Silika im erfindungsgemäßen Silika-Alumina-Stein beträgt 50 Gew.% bis 85 Gew.%, bezogen auf die Gesamtmasse des Silika-Alumina-Steines. Bevorzugt weist der erfindungsgemäße Silika-Alumina-Stein einen Silika-Gehalt von 50 Gew.% bis 80 Gew.%, noch mehr bevorzugt von 60 Gew.% bis 80 Gew.%, auf.

Der erfindungsgemäße Silika-Alumina-Stein weist einen Tridymit-Gehalt im Bereich von 2,5 Gew.% bis 50 Gew.% auf, d.h. der Gehalt an Tridymit im erfindungsgemäßen Silika-Alumina-Stein beträgt 2,5 Gew.% bis 50 Gew.%, bezogen auf die Gesamtmasse des Silika-Alumina-Steines. Im erfindungsgemäßen Silika-Alumina-Stein kann ein Gehalt an Tridymit im Bereich von 2,5 Gew.% bis 50 Gew.% erreicht werden, indem ein Tridymit-haltiger Silika-Sekundärrohstoff in entsprechender Menge im Versatz zur Herstellung des Silika-Alumina Steines verwendet wird, wie hierin beschrieben.

Bevorzugt weist der erfindungsgemäße Silika-Alumina-Stein einen Gehalt an Tridymit im Bereich von 2,5 Gew.% bis 45 Gew.%, weiter bevorzugt 4 Gew.% bis 45 Gew.%, noch weiter bevorzugt 5 Gew.% bis 45 Gew.%, noch weiter bevorzugt 5 Gew.% bis 40 Gew.%, noch weiter bevorzugt 7,5 Gew.% bis 35 Gew.%, noch weiter bevorzugt 10 Gew.% bis 30 Gew.% auf. Der Tridymit-Gehalt wird erfindungsgemäß mittels Pulver-Röntgendiffraktometrie ermittelt. Die Bestimmung erfolgt bevorzugt analog zur Bestimmung des Tridymit-Gehalts des Silika-Sekundärrohstoffes, wie oben beschrieben.

In bestimmten Ausführungsformen kann der Silika-Alumina-Stein weiters Calciumoxid (Calcia, CaO) umfassen. Der Anteil an Calciumoxid im Silika-Alumina-Stein beträgt bevorzugt mindestens 0,8 Gew.%, bevorzugt mindestens 1 Gew.%, und maximal 2 Gew.% bezogen auf die Gesamtmasse des Silika-Alumina Steines. Der Silika-Alumina-Stein weist insbesondere dann Calciumoxid auf, wenn ein Silika-Sekundärrohstoff umfassend Calciumoxid im Versatz zur Herstellung des Silika-Alumina-Steines eingesetzt wurde.

Die vorliegende Erfindung stellt außerdem die Verwendung eines erfindungsgemäßen feuerfesten Silika-Alumina-Steines in einer Aluminium-Elektrolysezelle, bevorzugt in der Bodenauskleidung einer Aluminium-Elektrolysezelle, bereit.

Dementsprechend stellt die Erfindung gemäß einem weiteren Aspekt eine Aluminium-Elektrolysezelle umfassend einen erfindungsgemäßen feuerfesten Silika-Alumina-Stein bereit, wobei der feuerfeste Silika-Alumina-Stein bevorzugt in der Bodenauskleidung der Aluminium-Elektrolysezelle vorliegt.

Unter einer "Aluminium-Elektrolysezelle" wird hierin ein Aggregat zur Herstellung von metallischem Aluminium verstanden. In Aluminium-Elektrolysezellen wird bekanntermaßen nach dem Hall-Héroult-Verfahren metallisches Primäraluminium bei Temperaturen von ca. 950 °C durch elektrolytische Reduktion von Al₂O₃ produziert, welches in einer auf Kryolith (Na₃AlF₆) und weiteren Fluorverbindungen (wie AlF₃ und CaF₂) basierenden Schmelze gelöst ist. Eine typische Elektrolysezelle besteht im Wesentlichen aus einer äußeren Stahlwanne, die mit Kohlenstoffmaterial in Form von Kohlenstoffblöcken ausgekleidet ist. In dieser Kohlenstoffauskleidung befindet sich der geschmolzene Elektrolyt und das Metall. Die Kohlenstoffblöcke im Boden fungieren dabei auch als elektrisch leitende Kathode im Prozess. Der Bodenbereich zwischen dieser Kathode und der Stahlwanne ist typischerweise mehrlagig mit feuerfesten Materialien ausgestattet. Die Bodenauskleidung hat den Zweck, die gewünschte Wärmebilanz der Zelle über die gesamte Laufzeit aufrechtzuerhalten und die Stahlwanne vor hohen Temperaturen und geschmolzenem Metall und Elektrolyt zu schützen.

In der Regel werden am häufigsten in den oberen (also heißseitigen) Lagen der Bodenauskleidung, in der Regel zumindest zweilagig, kosteneffiziente konventionelle feuerfeste dichte Schamottesteine eingesetzt. Während des Betriebes von Aluminium-Elektrolysezellen bei vorherrschenden Einsatztemperaturen von maximal ca. 920 °C durchdringen Na- und F-haltige Elektrolytbestandteile (im Wesentlichen eine mit Natriumfluorid angereicherte Kryolithschmelze sowie metallisches Natrium (NaF-Na₃AlF₆, Na)), die Kohlenstoffkathodenauskleidung und reagieren mit den Schamottesteinen. Diese Durchdringung findet bereits unmittelbar nach Inbetriebnahme statt und erfolgt während der gesamten Lebensdauer der Zelle, wobei das Ausmaß der Durchdringung im ersten Betriebsmonat weitaus am stärksten ist.

Die Hauptfunktion der Schamottesteine in der Bodenauskleidung von Aluminium-Elektrolysezellen ist es, das Eindringen von Elektrolytbestandteilen (insbesondere von Kryolith) in die weitere Bodenauskleidung zu hemmen bzw. zumindest zu verzögern, um zwecks Minimierung von Wärmeverlusten einen möglichst langen Schutz für die angrenzende Zellenbodenisolierung sicherzustellen.

Weiters sollte die Reaktion mit dem Elektrolyten unter weitestgehender Formstabilität der Schamottesteine ablaufen, um ein Heben der Kathodenblöcke in der Zelle zu vermeiden. Durch Reaktion mit den Elektrolytbestandteilen wird die chemische und mineralogische Zusammensetzung der Bodenauskleidung verändert, wodurch sich die Wärmebilanz der Zelle verschlechtert und die mechanische Belastungen innerhalb der Zelle zunehmen. Im schlimmsten Fall kann dies zu einem Totalausfall der Zelle führen. Nach längerer Laufzeit sind üblicherweise mehrere Steinlagen der feuerfesten Bodenauskleidung zerstört, wobei die Korrosionstiefe vom Zellenrand zur Mitte deutlich zunimmt.

Daher ist es vorteilhaft, wenn die Schamottesteine in der Bodenauskleidung von Aluminium-Elektrolysezellen eine möglichst hohe Kryolithbeständigkeit aufweisen, d.h. möglichst resistent gegenüber der Zersetzung durch Kryolith sind.

Das Schamottesteinmaterial wird in der Reaktionszone von den Elektrolytbestandteilen unter Bildung einer SiO₂-Al₂O₃-Na₂O-reichen Schmelzphase chemisch aufgelöst. Die Viskosität und Menge der Schmelzphase sind bei Einsatz eines SiO₂-reichen Schamottesteines höher als bei Al₂O₃-reichen Schamottesteinen. In der Reaktionszone rekristallisieren in Abhängigkeit vom Al₂O₃/SiO₂-Verhältnis der Schmelze und der vorherrschenden Temperatur unterschiedliche feste Phasen. Bei SiO₂-Überschuss in der Schmelze entsteht Albit (NaAlSi₃O₈), bei Al₂O₃-reicherer Zusammensetzung rekristallisiert unter Volumenzunahme Nephelin (NaAlSiO₄).

Die Bildung einer hochviskosen, möglichst SiO₂-reichen Schmelze bewirkt hierbei eine gewünschte Verzögerung der weiteren Steinauflösung und Infiltration der Schmelze in das über offene Poren zugängliche angrenzende Steinmaterial (dies bezeichnet man als "in-situ-Barrierebildung"). Diese in-situ-Barrierebildung wird auf die stark reduzierte Diffusionsfähigkeit der reagierenden Stoffe durch die viskose Schicht zurückgeführt (siehe Siljan, O.-J.: Refractory Materials for the Primary Aluminium Industry, Ceramic News Special Refractories, Volume 7, No. 2 (2000), S. 15-16).

Im Rahmen der vorliegenden Erfindung wurde gefunden, dass ein erfindungsgemäßer Silika-Alumina-Stein die Schutzschmelzbildung (d.h. die Bildung einer hochviskosen, möglichst SiO₂-reichen Schmelze) im Einsatz in der Bodenauskleidung von Aluminium-Elektrolysezellen begünstigt. Aufgrund dieser Schutzschmelzbildung weist der erfindungsgemäße Silika-Alumina-Stein eine hohe Kryolithbeständigkeit auf, d.h. der erfindungsgemäße Silika-Alumina-Stein kann der Zersetzung durch einen Kryolith-haltigen Elektrolyten lange standhalten.

Dies ist insbesondere dann der Fall, wenn die Körner des Silika-Sekundärrohstoffes im Versatz zur Herstellung des erfindungsgemäßen Silika-Alumina-Steines in einem relativ hohen Anteil, bevorzugt in einem Anteil von 20 Gew.% bis 50 Gew.%, bezogen auf die Gesamtmasse des Versatzes, vorliegen, und wenn der Silika-Sekundärrohstoff einen relativ hohen Tridymit-Gehalt (bevorzugt über 20 Gew.%, besonders bevorzugt über 25 Gew.%) aufweist.

In der vorliegenden Erfindung wurde insbesondere erkannt, dass ein Silika-Alumina-Stein, welcher aus einem Versatz hergestellt wurde, der anstelle des erfindungsgemäßen Silika-Sekundärrohstoffes einen Silika-Primärrohstoff wie Quarzsand oder Quarzit enthält, in der Anwendung in der Bodenauskleidung einer Aluminium-Elektrolysezelle deutlich reaktionsträger ist (und somit eine langsamere und weniger effiziente Schutzschmelzbildung aufweist) als ein erfindungsgemäßer Silika-Alumina-Stein. Dies liegt vermutlich an der geringeren Reaktivität der SiO₂ Modifikation Quarz im Vergleich zur SiO₂-Modifikation Tridymit.

### Beispiele

Die vorliegende Erfindung wird anhand der nachfolgenden Beispiele näher beschrieben, ohne den Schutzbereich einzuschränken.

Es wurden drei Versätze, jeweils bestehend aus einem Silika-Rohstoff, Schamotte als Rohstoff umfassend Alumina sowie Ton als Bindemittel, hergestellt. Als Silika-Rohstoff wurden einerseits refraktärer, feinkristalliner Quarzit und andererseits Silika-Sekundärrohstoff in Form von Produktionsausschuss aus der Silika-SteinHerstellung verwendet.

Die Silika-Rohstoffe wiesen die in Tabelle 1 angegebenen Zusammensetzungen auf (Angaben jeweils in Gew.%, Kornfraktionen bestimmt gemäß DIN EN ISO 1927-3 (2013)).

**Tabelle 1: Zusammensetzungen der in den Beispielen 1-3 verwendeten Silika-Rohstoffe**

| **Rohstoff** | **Oxidgehalt (Gew.%)** | | | | **Kornfraktionen (Gew.%)** | | |
|---|---|---|---|---|---|---|---|
| | **SiO₂** | **Al₂O₃** | **CaO** | **Rest** | **1-3 mm** | **0,25-1 mm** | **< 0,25 mm** |
| Silika-Sekundärrohstoff | 96,4 | 0,5 | 2,2 | 0,9 | 32 | 34 | 34 |
| Quarzit | 99,2 | 0,2 | 0,1 | 0,5 | 48 | 36 | 16 |

Der verwendete Silika-Sekundärrohstoff hatte folgende, mittels Pulver-Röntgendiffraktometrie ermittelte Gehalte an kristallinen SiO₂-Modifikationen (Angaben jeweils in Gew.%): 46 % Tridymit, 44 % Cristobalit und 1,9 % Restquarz (Rest: Glasphase und Kalziumsilikat).

Die Bestimmung des Gehalts an Tridymit, Cristobalit und Quarz im Silika-Sekundärrohstoff erfolgte mittels externer Standardmethode. Dafür wurde das zu bestimmende Probenmaterial bis zur Gewichtskonstanz bei ca. 110 °C getrocknet und in einer Wolframcarbid-Scheibenschwingmühle auf eine Korngröße von < 0,063 mm gemahlen (mittlere Korngröße < 0,030 mm). Für die Probenpräparation wurden beidseitig offene Probenhalter verwendet, wobei die Probenpräparation mit geringem Anpressdruck (< 0,05 MPa) durchgeführt wurde, um Textureffekte in der Probe zu verhindern. Folgende externe Standards (Referenzmaterialien) wurden verwendet: für Tridymit ein gebrauchter Silikastein mit 98 Gew.% Tridymit, für Quarz ein gebrauchter Silikastein ohne Restquarz, dem 10 Gew.% Quarz zugemischt wurden, und für Cristobalit thermisch behandeltes hochreines amorphes SiO₂, welches nach der thermischen Behandlung 100 Gew.% Cristobalit enthielt. Die Messungen wurden mit einem Diffraktometer der Firma Philips (X'Pert PRO MPD) durchgeführt, welches mit Ni-gefilterter Cu-Kα-Strahlung (1,5405 Å Wellenlänge), 40 kV Betriebsspannung, 40 mA Betriebsstrom und 1°/min 2Θ-Abtastgeschwindigkeit betrieben wurde. Die Messungen wurden über folgende 2Θ-Bereiche durchgeführt: Tridymit 22,6° bis 23,7°, Quarz 26,1° bis 27,0° und Cristobalit 21,0° bis 22,5°. Es wurden jeweils drei Proben der externen Standards und zwei Proben des zu bestimmenden Materials vorbereitet und gemessen.

Als Rohstoff umfassend Alumina wurde Al₂O₃-reiche Schamotte mit ca. 46 Gew.% Al₂O₃ und ca. 45 Gew.% SiO₂ verwendet. Als Bindemittel wurde SiO₂-reicher, quarzhaltiger Ton mit ca. 72 Gew.% SiO₂ und 20 Gew.% Al₂O₃ (Glühverlust ca. 5,5 Gew.%) verwendet. Der Glühverlust wurde bestimmt, indem der Ton bei 1025°C bis zum Erreichen der Gewichtskonstanz geglüht wurde.

Die Zusammensetzungen der hergestellten Versätze 1-3 sind in Tabelle 2 angeführt. Das Mischen der Komponenten erfolgte unter einer Wasserzugabe von 4,5 Gew.% bezogen auf die trockene Mischung (d.h. bezogen auf die Masse des Versatzes) in einem Intensivmischer. Die Gesamtmischzeit betrug ca. 15 Minuten. Auf die Zugabe eines organischen Bindemittels konnte aufgrund des gewählten hohen Ton-Versatzanteiles verzichtet werden.

**Tabelle 2: Zusammensetzungen der Versätze 1-3, sowie Wasserzugabe beim Mischen und ermittelte Gründichte der geformten Steine**

| **Rohstoffe (Gew.%)** | **1** | **2** | **3** |
|---|---|---|---|
| Schamotte, 3-6 mm | 10 | 15 | 15 |
| Schamotte, 0-3 mm | 15 | 20 | 20 |
| Silika-Sekundärrohstoff 0-3 mm | 45 | 35 | --- |
| Quarzit 0-3 mm | --- | --- | 35 |
| Ton, 20 Gew.% Al₂O₃ | 30 | 30 | 30 |
| Wasserzugabe (Gew.%) | 4,5 | 4,5 | 4,5 |
| Grünrohdichte (g/cm³) | 2,12 | 2,18 | 2,32 |

Die Mischungen wurden zu Steinformkörpern (ca. 250 mm x 124 mm x 64 mm) verpresst, die hierbei erzielten Grünrohdichten betrugen 2,12 g/cm³ bis 2,32 g/cm³. Die Grünkörper wurden bei 110 °C bis zur Gewichtskonstanz getrocknet, und die getrockneten Steinformkörper wurden bei einer Temperatur von 1280 °C und einer Haltezeit von 6 Stunden unter oxidierender Atmosphäre gebrannt.

Tabelle 3 zeigt die an den gebrannten Steinformkörpern ermittelten Eigenschaftswerte. Die Rohdichte und die offene Porosität wurde nach DIN EN 993-1:2019, die Kaltdruckfestigkeit (KDF) nach DIN EN 993-5:2019 und die angeführten Oxid-Gehalte nach DIN EN ISO 12677:2013 bestimmt. Der Gehalt an kristallinen SiO₂-Bestandteilen wurde mittels Pulver-Röntgendiffraktometrie ermittelt, wie oben beschrieben.

Die Prüfung der Beständigkeit gegenüber einer Kryolithschmelze mit Natriumfluorid-Überschuss ("Kryolith-Beständigkeit") wurde gemäß BS ISO 20292:2009 vorgenommen, wobei die Tiegelabmessungen und die Menge an Pulvermischung aus Kryolith und Natriumfluorid gegenüber der BS ISO 20292:2009 adaptiert wurden. Es wurden Tiegel (bestehend aus den gebrannten Steinformkörpern) mit Abmessungen von (ca.) 125 mm x 110 mm x 64 mm und mit einer zentralen Bohrung (ca. 57 mm Durchmesser und ca. 40 mm Bohrtiefe) hergestellt.

In den getrockneten Tiegel wurden 110 g einer Pulvermischung aus 60 Gew.% Kryolith (Na₃AlF₆) und 40 Gew.% Natriumfluorid (NaF) gefüllt, welcher anschließend mit einem ca. 10 mm starken Deckel aus dem zu prüfenden Steinmaterial gekapselt wurde. Der Tiegel wurde folgender Temperaturbehandlung in Luft unterzogen: 300 °C/h Aufheizrate bis 900 °C und 50 °C/h bis 950 °C, Haltezeit bei 950° C: 24 Stunden. Nach Ofenabschaltung wurden die Tiegel abgekühlt. Die abgekühlten Tiegel wurden diagonal geschnitten (zu bewertende Hälfte unter Beibehaltung der Bohrlochachse) und als Maß für die Kryolith-Beständigkeit wurde die aufgelöste Fläche ermittelt.

An einem Stein des Ausführungsbeispiels 1 (Silika-Sekundärrohstoffanteil von 45 Gew.%) ist zusätzlich das Druckerweichen nach DIN EN ISO 1093:2008 mit einem t_{0,5}-Wert von 1241 °C bestimmt worden, welcher höher oder zumindest vergleichbar ist mit den t_{0,5}-Werten konventioneller Schamottesteine, deren Gehalte an den Hauptoxiden SiO₂ und Al₂O₃ im ähnlichen Rahmen liegen.

**Tabelle 3: Eigenschaftswerte der aus den Versätzen 1 bis 3 hergestellten Silika-Alumina-Steine**

| **Eigenschaften** | **1** | **2** | **3** |
|---|---|---|---|
| Rohdichte (g/cm³) | 2,00 | 2,06 | 2,15 |
| Offene Porosität (%) | 19,4 | 18,3 | 17,4 |
| KDF (MPa) | 24 | 24 | 22 |
| SiO₂ (Gew.%) | 77,3 | 71,7 | 73,0 |
| Al₂O₃ (Gew.%) | 18,7 | 24,3 | 23,8 |
| CaO (Gew.%) | 1,16 | 0,93 | 0,17 |
| Tridymit (Gew.%) | 20 | 16 | --- |
| Cristobalit (Gew.%) | 25 | 24 | 18 |
| Quarz (Gew.%) | 5,5 | 5,6 | 28,6 |
| Kryolith-Beständigkeit (cm²) | 4,2 | 4,7 | 5,8 |

Die Ausführungsbeispiele zeigen, dass der Einsatz eines Silika-Sekundärrohstoffes (Beispiele 1 und 2) im Vergleich zum primären Silika-Rohstoff Quarzit (Beispiel 3) eine Verringerung der Rohdichte, eine leichte Verbesserung der Kaltdruckfestigkeit und eine deutliche Verbesserung der Kryolith-Beständigkeit bedingt. Die verringerte Rohdichte erlaubt zudem eine Reduktion der Herstellungskosten des Steines.

## Patentansprüche

1. Versatz zur Herstellung eines feuerfesten Silika-Alumina-Steines, umfassend:
1.1 Körner eines Silika-Sekundärrohstoffes,
1.1.1 wobei der Silika-Sekundärrohstoff einen Silika-Gehalt von mindestens 90 Gew.%, bevorzugt mindestens 93 Gew.%, aufweist;
1.1.2 wobei das Silika im Silika-Sekundärrohstoff zumindest teilweise als Tridymit vorliegt, wobei der Silika-Sekundärrohstoff einen Tridymit-Gehalt von mindestens 10 Gew.% aufweist;
1.1.3 wobei die Körner des Silika-Sekundärrohstoffes eine Korngröße von maximal 6 mm, bevorzugt maximal 3 mm aufweisen;
1.2 Körner eines Rohstoffes umfassend Alumina,
1.2.1 wobei der Rohstoff umfassend Alumina einen Alumina-Gehalt von mindestens 10 Gew.% aufweist; und
1.3 ein Bindemittel umfassend Ton.

2. Versatz nach Anspruch 1, wobei der Silika-Sekundärrohstoff einen Tridymit-Gehalt im Bereich von 10 Gew.% bis 90 Gew.%, bevorzugt 20 Gew.% bis 80 Gew.%, weiter bevorzugt 25 Gew.% bis 80 Gew.%, noch weiter bevorzugt 30 Gew.% bis 70 Gew.% aufweist.

3. Versatz nach Anspruch 1 oder 2, wobei der Versatz die Körner des Silika-Sekundärrohstoffes in einem Anteil von 5 Gew.% bis 50 Gew.%, bevorzugt 10 Gew.% bis 50 Gew.%, weiter bevorzugt 20 Gew.% bis 50 Gew.%, noch weiter bevorzugt 25 Gew.% bis 45 Gew.%, bezogen auf die Gesamtmasse des Versatzes, umfasst.

4. Versatz nach einem der Ansprüche 1 bis 3, wobei das Alumina im Rohstoff umfassend Alumina zumindest teilweise als Alumosilikat, bevorzugt Mullit, vorliegt.

5. Versatz nach Anspruch 4, wobei der Rohstoff umfassend Alumina Schamotte, Klinker, und/oder Porzellan umfasst.

6. Versatz nach einem der Ansprüche 1 bis 5, wobei der Rohstoff umfassend Alumina kalzinierten Bauxit, Andalusit, kalzinierte Tonerde und/oder Korund umfasst.

7. Versatz nach einem der Ansprüche 1 bis 6, wobei die Körner des Rohstoffes umfassend Alumina eine Korngröße von maximal 6 mm aufweisen.

8. Versatz nach einem der Ansprüche 1 bis 7, wobei der Versatz die Körner des Rohstoffes umfassend Alumina in einem Anteil von 10 Gew.% bis 85 Gew.%, bevorzugt 15 Gew.% bis 75 Gew.%, weiter bevorzugt 15 Gew.% bis 70 Gew.%, noch weiter bevorzugt 20 Gew.% bis 60 Gew.%, bezogen auf die Gesamtmasse des Versatzes, umfasst.

9. Versatz nach einem der Ansprüche 1 bis 8, wobei der Versatz Ton in einem Anteil von 5 Gew.% bis 50 Gew.%, bevorzugt 5 Gew.% bis 40 Gew.%, bezogen auf die Gesamtmasse des Versatzes, umfasst.

10. Verfahren zur Herstellung eines Versatzes nach einem der Ansprüche 1 bis 9, umfassend folgende Schritte:
10.1 Bereitstellen eines Silika-Sekundärrohstoffes mit einem Silika-Gehalt von mindestens 90 Gew.%, bevorzugt mindestens 93 Gew.%, wobei das Silika im Silika-Sekundärrohstoff zumindest teilweise als Tridymit vorliegt, wobei der Silika-Sekundärrohstoff einen Tridymit-Gehalt von mindestens 10 Gew.% aufweist;
10.2 Zerkleinern des Silika-Sekundärrohstoffes, um Körner mit einer Korngröße von maximal 6 mm, bevorzugt maximal 3 mm, zu erhalten;
10.3 Mischen der Körner des Silika-Sekundärrohstoffes mit Körnern eines Rohstoffes umfassend Alumina, wobei der Rohstoff umfassend Alumina einen Alumina-Gehalt von mindestens 10 Gew.% aufweist, und einem Bindemittel umfassend Ton, um einen Versatz zur Herstellung eines feuerfesten Silika-Alumina-Steines zu erhalten.

11. Verfahren nach Anspruch 10, wobei der Silika-Sekundärrohstoff in Form von Silika-Stein-Produktionsausschuss und/oder in Form von gebrauchten Silika-Steinen bereitgestellt wird, wobei die gebrauchten Silika-Steine bevorzugt aus einem Koksofen oder aus einer Glasschmelzanlage gewonnen werden.

12. Verfahren zur Herstellung eines feuerfesten Silika-Alumina-Steines, umfassend folgende Schritte:
12.1 Bereitstellen eines Versatzes nach einem der Ansprüche 1 bis 9;
12.2 Mischen des Versatzes mit Wasser, um eine formbare Masse zu erhalten, wobei das Wasser bevorzugt in einer Menge von 3 Gew.% bis 16 Gew.%, besonders bevorzugt 4 Gew.% bis 8 Gew.%, bezogen auf die Masse des Versatzes, zugegeben wird;
12.3 Formgebung, bevorzugt Pressen, der formbaren Masse, um einen Grünkörper zu erhalten;
12.4 Trocknen des Grünkörpers;
12.5 Brennen des getrockneten Grünkörpers bei einer Temperatur zwischen 1200 °C und 1500 °C, um einen gebrannten feuerfesten Silika-Alumina-Stein zu erhalten.

13. Feuerfester Silika-Alumina-Stein, aufweisend:
13.1 einen Alumina-Gehalt von 10 Gew.% bis 45 Gew.%; und
13.2 einen Silika-Gehalt von 50 Gew.% bis 85 Gew.%;
13.3 wobei das Silika zumindest teilweise als Tridymit vorliegt, wobei der Silika-Alumina-Stein einen Tridymit-Gehalt im Bereich von 2,5 Gew.% bis 50 Gew.%, aufweist.

14. Feuerfester Silika-Alumina-Stein nach Anspruch 13, wobei der Silika-Alumina-Stein einen Tridymit-Gehalt im Bereich von 4 Gew.% bis 45 Gew.%, bevorzugt 5 Gew.% bis 40 Gew.%, weiter bevorzugt 7,5 Gew.% bis 35 Gew.%, aufweist.

15. Aluminium-Elektrolysezelle umfassend einen feuerfesten Silika-Alumina-Steines nach Anspruch 13 oder 14, wobei der feuerfeste Silika-Alumina-Stein bevorzugt in der Bodenauskleidung der Aluminium-Elektrolysezelle vorliegt.
